# EUROPEAN PATENT APPLICATION

(11) **EP 0 669 584 A2**
(43) Date of publication of application: **30.08.1995**
(21) Application number: 95301056.8
(22) Date of filing: 20.02.1995
(51) Int. Cl.: G06F 15/16, G06F 11/00, G06F 11/20

(54) **Massively parallel multiprocessor system with fault-tolerant interprocessor network**

(30) Priority: 24.02.1994 US 201103
(71) Applicant: TANDEM COMPUTERS INCORPORATED, Cupertino, California 95014-0709 (US)
(72) Inventor: Horst, Robert W., Cupertino, California 95014 (US)
(74) Representative: Ayers, Martyn Lewis Stanley

(57) **Abstract**

A massively parallel processor is constructed from a large number of individual processor units connected, first, to form a plurality of processor sections containing one or more of the processor units interconnected for data communication by a redundant bus structure. In turn, the processor sections are then interconnected in a torroidal configuration to form an array of rows and columns in which each processor section is coupled to four immediate neighbor processor sections by dual communication paths, thereby providing at least two separate paths for communicating data from any one processor unit to any other processor unit. Each processor unit includes separate input/output bus structure which can be used to interconnect processor section arrays in a third dimension for expansion.

## Description

### BACKGROUND OF THE INVENTION

The present invention is directed to data processing systems, and more particularly to a parallel processing environment in which a large number of processing units in a network are interconnected in a parallel topology to form a massively parallel processing system.

Parallel processing has found a variety of commercial applications in today's industry such as, for example, in on-line transaction processing to handle numerous individual transactions or small tasks are distributed among multiple processors to be handled quickly. Other parallel processing applications include maintaining and accessing large data bases for record-keeping and decision-making operations, or as a media servers that provide an accessible store of information to many users. Parallel processing's particular advantage resides in the ability to handle large amounts of diverse data such as, for example, in decision making operations which may require searches of diverse information that can be scattered among a number of storage devices. Or, a parallel processor media server application could be in an interactive service environment such as "movies-on-demand," that will call upon the parallel processor to provide a vast number of customers with access to a large reservoir of motion pictures kept on retrievable memory (e.g., disk storage devices). This latter application may well require the parallel processor to simultaneously service multiple requests by locating, selecting, and retrieving the requested motion pictures, and then forwarding the selections to the requesting customers.

A limiting factor on parallel processing applications is the requirement of high availability of the system (e.g., 24 hours a day, 365 days a year) which operates to limit the size of the system (e.g., the number of processor units that make up the system). This limitation results from the fact that as the number of system components increases, so do the chances of a component failure.

Perhaps a more significant limit on parallel processor system size is the number of communications paths available for accessing and moving the large amounts of data often encountered in parallel processing environments. And, the problem of limited throughput can be exacerbated as the number of individual processor units of the system increases so that massive parallel processing systems are ineffective in uses requiring searching, movement, and/or communication large amounts of data. Where a small number of communication paths can act to limit the amount of processing speed and power that can be afforded by parallel processing techniques, increasing the number of communication paths tends to increase the risk that component failure will bring down significant portions of the parallel processor, if not the entire parallel processor.

Accordingly, there is needed a technique, and an architecture, for interconnecting large pluralities of processor units to form a massively parallel processing system that provides each processor unit with high availability and a useable bandwidth for accessing and providing data maintained by the system.

The present invention is designed to incorporate presently available, off-the-shelf, elements to interconnect a plurality of individual processor units to form a massively parallel processor that can be much less expensive than, for example, conventional, so called "top-of-the-line" supercomputers, provide as much or more computing power with much higher performance. Further, the interconnections, forming data communication paths between groups of processor units, are redundant so that no single component failure will operate to terminate use of any portion of the parallel processor. In fact, as will be seen, the interconnecting network topology between these groups of processor units provide a multitude of data communication paths between any one of the groups of processor units and any other group so that loss of an entire redundant communication path will not significantly affect performance or operation of the parallel processor.

Broadly, the invention is directed to interconnecting a large multiple of self-contained processor units (e.g., each with their own memory systems, input/output (I/O), peripheral devices, etc.) in a manner that provides each processor unit with at least two data paths to any other processor unit. In one construction of the invention, small numbers (e.g., one or more, up to four) of the processor units are interconnected to one another, forming "processor sections," by a redundant bus structure. The processor sections, in turn, are interconnected by dual ring data communication paths, forming a row-column array of processor sections in which each processor section of the array is provided with two direct communication paths to each of its four immediate neighbors (including those processor sections which are located at the edge or peripheries of the array which are coupled to processor sections at the opposite peripheries). Each processor section is thereby provided with at least four data communication paths to any other processor section of the array.

The result is a torroidal interconnection of multiple processor units forming a massively parallel processor with fault tolerant, high bandwidth data communication paths from any one processor unit to any other processor unit of the parallel processor.

In a further construction of the invention a first array of processor sections, interconnected as described above, can be coupled to a similarly constructed second array of processor sections, using the I/O paths available to one or more of the processor units of each processor section. Thereby, a three-dimensional array of multiple processor units is used to obtain the massively parallel processor.

In the disclosed embodiment of the invention, the processor units of each processor section are interconnected by a dual interprocessor bus structure for communicating data therebetween generally according to the teachings of U.S. Patent No. 4,228,496, although those skilled in this art will see that other interprocessor connections may be used for processor units within the processor sections. Connectivity between processor sections in one direction of the array (e.g., the columns) is preferably accomplished using the apparatus and methods taught by U.S. Patent Nos. 4,667,287 and 4,663,706, whose teachings are incorporated herein be reference. Connectivity between processor sections in the other direction of the array (e.g., the rows) is preferably through use of the apparatus and method taught by U.S. patent application Ser. No. 07/599,325, filed October 17, 1990, and assigned to the assignee of the present application, which is incorporated herein by reference.

Interprocessor data communications within any processor section uses the interprocessor bus structure. Data communications between any processor unit of one processor section and a processor unit of another processor section will be first by the interprocessor bus to the appropriate connection apparatus, then via interconnecting links to the processor section containing the destination processor unit, and on the interprocessor bus structure to the destination processor unit. When data is communicated between processor units of different processor sections, the interconnection apparatus will select the shortest of two possible paths provided by the interconnecting ring for transmission to the destination processor section and processor unit. When, however, data is to be communicated between a processor sections contained in different rows of the array, the data is communicated by first routing the message "vertically" (i.e., from row to row), until the row containing the destination processor unit is encountered. Then, the message is routed "horizontally" (i.e., within that row) to the destination processor section (and the destination processor unit it contains). Again, the shortest possible paths for both the row-to-row route, and within the destination row, are selected.

A number of advantages are realized by the present invention. First and foremost is the fact that the interconnection of the multiple processor units is fault tolerant; a fault in a data communication path need not bring down the system, or a significant part of the system. Should a data communication path fail, other paths are available. Thus, the present invention provides a highly available parallel processor.

Another advantage of the present invention is that throughput is significantly increased. Since the number of interconnections between the groups of individual processors units forming the parallel processor system is increased, data traffic is also increased, in turn increasing data input/output through the system.

These and other advantages will become apparent to those skilled in this art upon a reading of the following detailed description of the invention, which should be taken in conjunction with the accompanying drawings.
Fig. 1 is a simplified representation of an array of processor sections, each containing one or more processor units, interconnected according to the present invention, forming a massively parallel processor system;
Fig. 2 is a diagrammatic illustration of one of the processor sections, showing one method of interconnecting the processor units that make up the processor section, and illustrating the apparatus used to interconnect the processor section other the processor sections of Fig. 1;
Fig. 3 is a simplified diagram of two four-processor section arrays interconnected to form a three-dimensional parallel processor array; and
Fig. 4 is an alternate embodiment of the invention, illustrating, in simplified form, an array of a paired-processor processing units interconnected by multi-ported input/output routers to form a massively parallel processor according to the present invention.

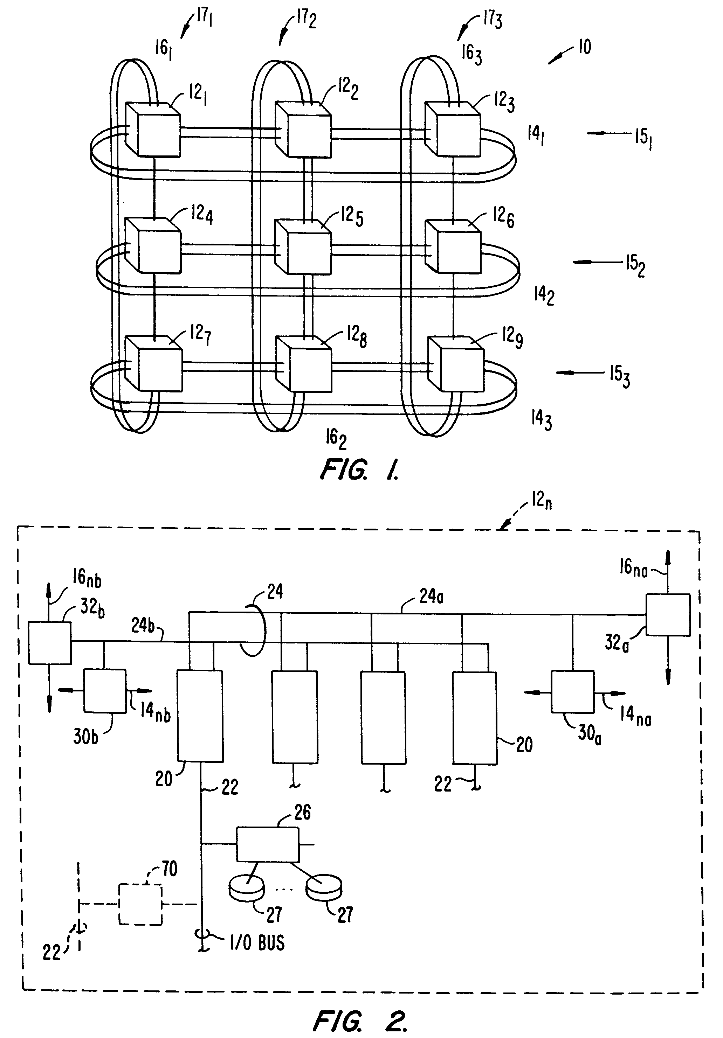

Turning now to the figures, and for the moment principally Fig. 1, illustrated in simplified form is a parallel processor system, designated generally with the reference numeral 10. As shown, the parallel processor system 10 comprises a plurality of processor sections 12, each of which contain one or more processor units. In the context of the present invention, it is preferred that the number of processor units contained in each processor section 12 contains be limited to four, although a principle reason is to keep from overloading the bus structure used to communicate data between the processor units in a processor section.

Continuing with Fig. 1, the processor sections 12 are interconnected by a horizontal communication paths 14 in ring-like configurations, forming a plurality of processor section rows 15. In similar fashion communication paths 16 interconnect the processor sections 12 in a vertical direction (as viewed in fig. 1) in ring-like manner to form columns 17 of processor sections 12. As shown in Fig. 1, each of the communication paths 14, 16 are redundant, providing thereby a pair of communication paths in any direction for each of the processor sections 12. Thus, for example, the communication path 14₁ provides the processor section 12₁ with four separate routes for communicating data to any of the other processor sections 12₂ and 12₃ in row 15₁: two that directly connect the processor section 12₁ to its immediate neighbor processor section 12₂, and two that directly connect the processor section 12₁ to its other immediate neighbor (within row 15₁) processor section 12₃. Should the processor section 12₁ need to send a data communication to the processor section 12₃, it can do so by either one of the four routes: two directly, or two via the processor section 12₂. In practice, such a communication will be conducted using the shortest possible path, here the direct connection, if available.

In similar fashion processor sections 12 are interconnected in the direction of columns 17 by the communication paths 16 which are also redundantly constructed. Thus, as in the direction of the rows 15, each processor section 12 has effectively four communication paths to any processor section 12 in that same column 17.

The ring interconnections provided by the communication paths 14 and 16 provide each processor section 12 with a number of message routes to any other processor section 12. For example, the processor section 12₁ may send message traffic to the processor section 12₈, using any combination of the vertical paths 16₁, 16₂ and horizontal communication paths 14₁, 14₂, 14₃. The preferred routing, for simplification, is to first route message data from the processor section 12₁ along a column communication path (i.e., communication path 16₁) until the row 15 containing the destination processor section 12 of the data is reached; then the data is routed along the communications path 14₃ containing the destination processor section 12 to receive the data, processor section 12₈.

Further, the shortest possible routes from the processor section 12₁ to the processor section 12₈ would selected. Thus, rather than communicating the message data from the processor section 12₁ to the processor section 12₄, and from there to the processor section 12₇ of the row 15₃, the data would be routed along a path that communicates it directly from the processor section 12₁ to the processor section 12₇. When received at the destination row 15₃ by the processor section 12₇) the message data will again be routed along the shortest horizontal path to the destination processor section 12₈ (i.e., directly from the processor section 12₇ to the processor section 12₈, rather than via the processor section 12₉ and then to the processor section 12₈). Thus, not only does the invention provide additional paths for data communication between the multiple processor units of the parallel processor system 10, but communications are conducted in a way that assures that the shortest route is taken from the sending processor unit (processor section) to the destination processor unit (processor section).

Turning now to Fig. 2, a processor section, 20ₙ is shown containing four substantially identically constructed processor units 20 interconnected by an interprocessor structure bus 24 for communicating data therebetween as taught by the aforementioned U.S. Pat. No. 4,228,496. The processor section may contain less processor units 20 (e.g., 1-3), and processor sections 12 of a row 15 or column 17 may have different numbers of processor units.

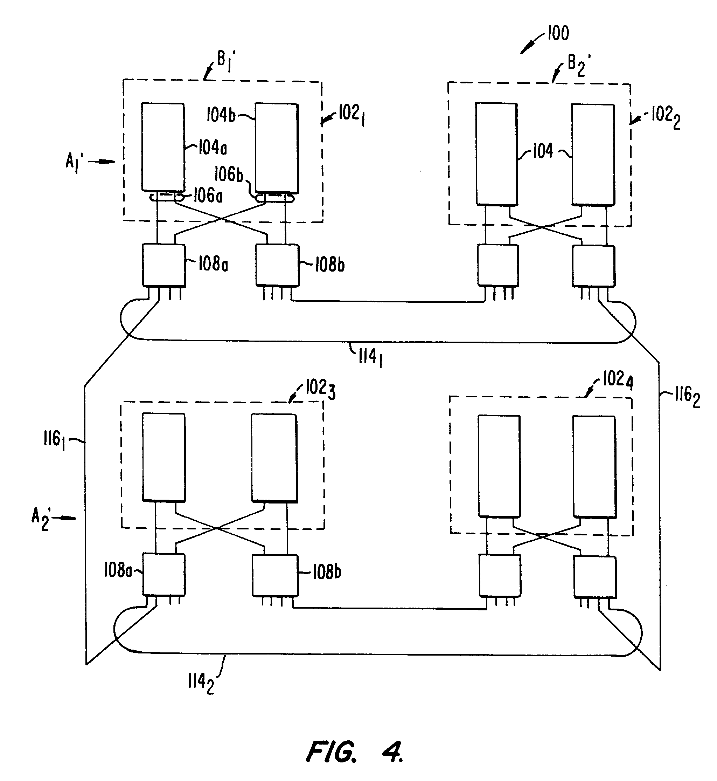

Continuing with Fig. 2, each of the processor units 20 has an input/output (I/O) system that includes an I/O buss 22 connecting the processor unit 20 to various peripherals and/or peripheral controllers such as the disk controller 26 that provides the processor unit 20' access to the disk storage units 27. As taught by the '496 patent, the disk controller 26 has a second port to provide access to, and control over, the storage units 27 to another of the processor units 20. Each of the processor units 20 are interconnected by the bus structure 24. Although the bus structure 24 is shown as being separate from the bus structure 22, it will be evident to those skilled in the art that, using today's high speed technology (e.g., microprocessors, or microprocessor controlled channels, etc.) that interprocessor communications could be conducted via interconnecting the I/O busses of the processors 20 using appropriate communication controllers as is done in a second embodiment of the invention illustrated in Fig. 4, and discussed below.

However, there are advantages to using separate bus structure 24 for interprocessor communication, one of which is the availability of connection apparatus designed to operate with such bus structure 24 for interconnecting processor sections in the manner shown in Fig. 1. The bus structure 24 typically, as taught by the '496 patent, is implemented with redundant busses 24a, 24b, to provide a fault tolerant capability as well as increased message traffic bandwidth.

Each of the pair of row and the pair of column communication paths that couple the processor section 12ₙ to its four immediate neighbors will connect to a corresponding one of the interprocessor bus 24a, 24b. Thus, the interprocessor bus 24a that communicates processors 20 to one another is coupled to one of the pair of row communication paths 14ₙₐ by row interface unit 30a. A column interface unit 32a connects the interprocessor bus 24a to one of the pair of vertical or column communication paths 16ₙₐ.In similar fashion, the redundant interprocessor bus 24b connects to the other of the row communication paths 14_{nb} by a row interface unit 30b, while the other of the column communication paths 16_{nb} is connected to the interprocessor bus 24b by a column interface unit 32b.

The structure and operation of the row interface units 30a, 30b are taught by U.S. Patent Application Ser. No. 07/599,325, filed October 17, 1990. U.S. Pat. Nos. 4,667,287 and 4,663,706 teach the structure and operation of the vertical interface units 32a, 32b. Both row and column interface units 30, 32 are structured to use serial fiber optic links to form the dual communication paths 14, 16. It will be evident that bit parallel communication paths could also be implemented.

Each processor unit 20 is responsible for handling communications from its processor section to another processor section containing the destination processor unit 20 in the vertical direction (i.e., along the column communication paths 16). Each processor unit 20 maintains a table identifying which processor units 20 form a part of its own sub-system 15, and in which sub-systems they are located. However, only one processor unit 20 of each processor section 12 is responsible for obtaining and maintaining (updating) the information used to develop the tables by the other processor units 20 of the processor section 12.

The information is gathered as follows. Each responsible processor unit 20 of each processor section 12 will develop an inquiry message that is sent to its immediate neighbor processor sections 12, requesting them to identify their immediate neighbors, the direction of such neighbors (i.e., which is on the "right," and which is on the "left"), and information as to the make-up of the rows 15 such as what processor units are in such row 15. When the interrogating processor receives back responses to its inquiry messages, it will then formulate similar inquiries that are sent beyond the immediate neighbors to the processor sections on the other side of the immediate neighbors. Again, the responses received back are used to send additional message beyond immediate neighbors so far identified by the received responses to the inquiries to still further neighbors, and this process continues until the responses begin to identify to the interrogating processor unit 20 processor sections (and row make-ups) already known to it. At that point the interrogating process stops, and the information gathered thereby is distributed to the other processor units 20 of the processor section 12 containing the interrogating processor unit 20. Periodically this interrogating process is re-initiated to ensure that the view of the system obtained since the last interrogation process has not changed, or if it has, what those changes are. Any changes are used to update the tables maintained by each processor unit 20.

A similar procedure is used for the row communication paths 14 within each system to determine where, and in which (shortest) direction each processor unit 20 is located, relative to any particular processor section 12. As described in U.S. patent application Ser. No. 07/599,325, a maintenance diagnostic system (MDS; not shown herein) forms a part of each of the rows 15, and is connected to each processor unit 20 and row interface unit 30 of that row. Among the various tasks of the MDS (not shown herein) is the responsibility to interrogate each processor unit 20 of a row 15 with which the MDS system is associated to determine what processor units are contained in the row and associated with what processor sections. This information is written to the row interface units 30 of the row, and used, when messages are to be sent from one processor unit 20 to another in a different processor section 12 of a row 15, to select a direction (route) along the row communication path 16 that is the most direct to the processor section 12 containing the destination processor unit 20.

Once the parallel processor system 10 has been brought up, and the various interrogations completed to determine where various processor units are, the system 10 operates generally as follows. Assume that Fig. 2 is an illustration of the processor section 12₉ (Fig. 1), and that one of the processor units 20 desires to send information to, for example, a destination processor unit 20 of the processor section 12₂. The sending processor unit 20 will create a message according to a predetermined format that identifies the destination processor unit 20 of processor section 12₂ by the row in which it is contained, and the processor unit's identification within that row. The sending processor unit 20 then transmits the message onto one of the two interprocessor busses 24a, 24b. Since, according to protocol, the message will be transmitted first vertically, or along a column communication path 16, the column interface unit 32 will recognize the address of the message as being destined outside the particular row and will capture the message for transmission on the corresponding column communication path 16ₙ. In doing so, the column interface unit 32 will select the shortest path to the row 15 containing the destination processor unit 20, based upon the address contained in the message, and transmit the message on the selected path.

The transmitted message will be received by the column interface 32 associated with the processor section 12₃, recognized as being for a destination processor unit that is in the same row 15 as that of the processor section 12₃, and couple the message to the interprocessor bus 24 of that processor section 12. Since the message identification (address) will not identify the any of the processor units 20 of the processor section 12₃, but does identify a processor in the same sub-system 15 as that of processor section 12₃, the row interface unit 30 of that processor section will pick up the message from the interprocessor bus 24. The row interface unit 30 will determine from the address contained in the message which direction to transmit the message on the row communication path 14₁ for the shortest path to the destination processor unit 20, and send it along that selected path to the processor section 12₂. There, the associated row interface unit 30 will communicate the message to the interprocessor bus 24 where it is then received by the destination processor unit 20 coupled thereto.

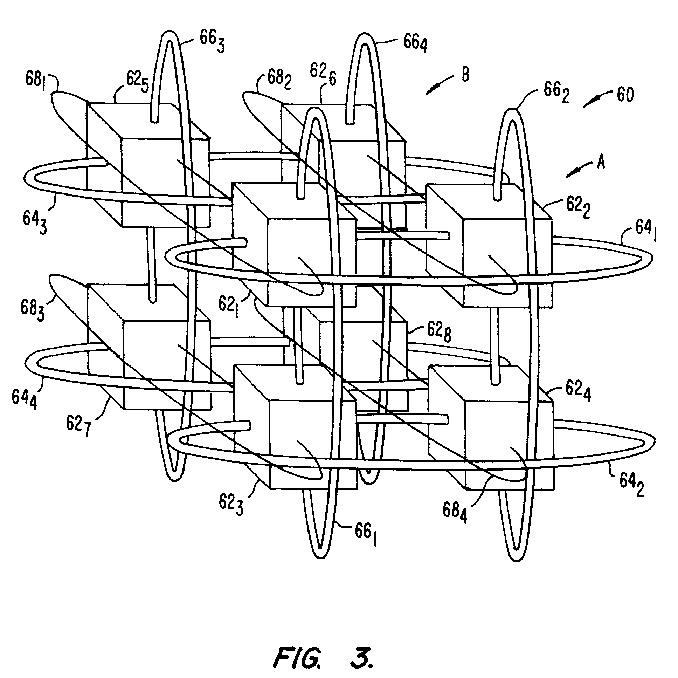

The parallel processor system 10, described above, uses a two-dimensional torroidal network configuration to interconnect the processor sections 12 of Fig. 1 in rows and columns, forming the row and column communication paths 14 and 16, respectively. However, the network can be extended to three dimensions, as illustrated in Fig. 3.

As Fig. 3 illustrates, in more simplified form (for reasons of clarity), a parallel processor 60 includes a plurality of processor sections 62 organized by communication paths as described above in two separate planes A, B. The processor sections 62 of each plane are interconnected by row and column ring communication paths 64, 66, respectively, to form a torroidal network configuration within each plane. More specifically, the plane A comprises processors 62₁ ... 62₄ interconnected by row communication paths 64₁, 64₂ and column communication paths 66₁, 66₂. In similar fashion, the processor section plane B comprises the processor sections 62₅ ... 62₈ interconnected by the row and column communication paths 64₃, 64₄ and 66₃, 66₄, respectively.

In addition to the interconnecting row and column communication paths 64, 66, each processor section 62 of each plane A, B is also coupled by communication paths 68 to corresponding processor sections 62 of the other plane, forming in effect a three-dimensional parallel processor 60. The path connections between each processor section 62 and the corresponding row and column communication paths 64, 68 are the same as described above (i.e., they use the row and column interface units 30, 32, Fig. 2). The path connections for the paths 68 are established using the I/O system of the processor units 20 and a communications controller. Thus, for example, assume that the processor section 12ₙ of Fig. 2 is the processor section 62₁ of Fig. 3. For the configuration shown in Fig. 3, a processor unit 20 is provided a communications controller 70 (illustrated in phantom in Fig. 2) that connects to a processor unit 20 (not shown) in the processor section 62₅ to provide the bridge between the two processor sections 62₁, 62₅, and associated planes A, B.

Message traffic within the individual planes of a three dimensional torroidal configuration would be the same as described above: message traffic would first be sent along a vertical communication path 66 until it reached the horizontal row containing the destination processor unit. Then, the message would be send horizontally until it reached the communications path 68 containing the processor section 62 having the destination processor unit. Finally, the message would be transmitted via the associated communications controllers from one processor section 62 to the other, where it would be put on the associated interprocessor bus (unless the message was for the particular processor unit responsible for maintaining the bridge between the planes A, B). (Although the parallel processor 60 shown in Fig. 3 contains only four processor sections 62 in each plane A, B, this is done for ease of description; the planes themselves could easily be expanded, as could the third dimension as will be evident to those skilled in this art.) Thus, if the destination processor unit is in another plane from that of the sender processor, message traffic would still travel first along a column communication path, then in along a row communication path, and then across from one of the planes A, B to the other.

The aforementioned discussion of the invention has illustrated its use in connection with a particular architecture: processor sections in which the individual processor units are connected by an interprocessor bus. The invention is susceptible for use in other architectures, however, albeit preferably fault tolerant architectures. Thus, for example, Fig. 4 illustrates the invention in connection with a different architecture that is more discussed in more detail in U.S. patent application Ser. No. 07/992,944, filed December 17, 1992, and assigned to the assignee of this application, the disclosure of which is incorporated herein by reference also.

As disclosed in the aforementioned application, and as illustrated generally in Fig. 4, a computer architecture comprises pairs 102 of central processing units (CPUs) 104, that may operate in lock step fashion, or individually, to perform data processing activities. Each CPU 104 has an input/output system that is accessed by the CPU through multi-ported routers 108. In addition, each CPU 104 (e.g., CPU 104a) is connected to the router (e.g., 108b) of its sibling CPU (e.g., 104b) and, therefore, has access to the I/O system of that sibling. Conversely, the sibling CPU (104b) is connected through the router 108a so that it has access to the I/O system of its sibling, CPU 104a.

Fig. 4, shows a parallel processor 100 comprising four sets of CPU pairs 102, each CPU pair comprising the two CPUs 104a, 104b. Each CPU 104 has an individual input/output system that is accessed through an associated router 108 by one of two bus connections 106. The bus connections of CPU 104a has a bus pair 106a connecting it to routers 108a, 108b. The router 108a provides the CPU 104a with access to its own I/O system (not shown). Similarly, the router 108b provides the CPU 104b with access to its I/O system. In addition, the routers 104a, 104b respectively provide CPUs 104b, 104a with access to the I/O system of the other. The other CPU pairs 102₂, 102₃, 102₄ are, as Fig. 4 shows, similarly constructed.

The routers 108 are multi-ported devices, providing at each port bi-directional communication interfaces. Thus, each of the buses connecting the CPU 104a to the routers 108a, 108b is a bi-directional bus configuration, permitting two-way communication of data.

The routers 108 are designed to have six bidirectional ports. When used as the access point to the I/O system of a particular CPU, two of the ports are used to connect to the CPU pair 102; the other four are free for other interconnections. Thus, one of the bi-directional ports of the routers 108 may be interconnected by bus paths 114 forming multi-processor rows A'. Another port of one router associated with each CPU pair 102 connects by bus paths 116 to form the columns B' as illustrated in Fig. 4. Thereby, the torroidal network configuration is attained in the same fashion as the processor sections 12 where interconnected by the communication paths 14, 16 of Fig. 1.

A similarly constructed and interconnected array of CPU pairs 102 could be connected, using other ports of the routers 108, in order to form a three-dimensional torroidal network array connection such as that illustrated in Fig. 3. Further, the architecture of Fig. 4 lends itself to being expanded much easier using routers 108, as more particularly discussed in the aforementioned application (Ser No. 07/992,944).

Having not described the present invention in the context of two equivalent parallel processor architectures, the advantages of the dual-torroidal network interconnection of the processor sections should now be evident. Of particular importance is the fact that failure of any single data communication, or any component in a communication path, path between any pair of the processor units will not inhibit or destroy communication between that pair of processor units. Further, communication between processor sections is capable of withstanding loss of both direct communication paths connecting neighboring processor systems.

While a full and complete disclosure of the invention has been provided herein above, it will be obvious to those skilled in the art that various modifications and changes may be made.

## Claims

1. a multiple processor system, comprising:
a plurality of processor sections, each of the plurality of processor sections having one or more processors units and means interconnecting the one or more processors units for communicating data therebetween;
means for interconnecting the plurality of processor sections in an array of a first number of rows of processor sections and a second number of columns of processor sections in a manner that establishes for each row and each column of processor sections a circular communication path for communicating data form any one of the plurality of processor sections to any other of the plurality of processor sections in the array;
whereby the interconnecting means provides at least two communication paths between any one of the plurality of processor sections and four immediate neighbor ones of the plurality of processor sections.

2. The multiple processor system of claim 1, wherein the means interconnecting the processor units of each of each of the plurality of processor sections includes redundant bus means coupled to each of said processor elements.

3. The multiple processor system of claim 2, wherein the interconnecting means is coupled is coupled to the bus means of each corresponding one of the plurality of processor sections.

4. A multiple processor system, comprising:
a first plurality of processor sections, each of the processor sections comprising:
one or more processor elements, and
means interconnecting the processor elements for communicating data therebetween;
means for interconnecting said sections to form at least first and second rows of processor sections; and
means for interconnecting corresponding ones of the sections of each of the first and second rows to form a dual ring-like communication path that provides a dual communication path for each section of each for the first and second rows to each of the other of the first and second rows.

5. A method of forming a massively parallel processing system, comprising the steps of:
providing plurality of processor sections, each of the processor sections including at least a pair of processor elements interconnected for communicating data therebetween;
interconnecting the processor sections in a manner that forms a first number of processor section groups, each of the number of processor section groups including means forming a ring data communication path for communicating the processor section of such processor section group to one another by two data communication paths; and
interconnecting a second number of corresponding ones of processor sections, each of the second number of corresponding ones of processor sections being contained in a corresponding one of the first number of processor section groups, in a manner that forms two communication paths for communicating data between the processor sections of each of the second number.

6. A parallel processor system, comprising:
a number of parallel processor sub-systems, each of the number of parallel processor sub-systems including a plurality of processor units grouped in processor sections, each of the processor sections having at least one of the plurality of processor units;
first means forming a ring data communication path between the processor units of each of the number of parallel processor sub-systems to data communication therebetween; and
second means interconnecting corresponding ones of the number of processor sections of the parallel processor sub-systems in a ring configuration to communicating data therebetween.

7. The parallel processor system of claim 6, wherein the first and second means include fiber-optic data paths for communicating data.

8. A parallel processing system, comprising:
a plurality of processor sections, each of the processor sections including at least a pair of processor units coupled to one another by processor bus means for interprocessor communication;
means for interconnecting the plurality of processor sections in an array arranging the plurality of processor sections in rows and columns, the interconnecting means including a pair of bus means coupling each one of the plurality of processor sections to each of four other of the plurality of processor sections for data communication to that the processor sections of each row and each column are coupled together by the interconnecting means in dual data communicating ring configurations.

9. The parallel processing system of claim 8, wherein the bus means for coupling the processor units of each processor section includes at least first and second bus means.

10. The parallel processing system of claim 9, including circuit means for coupling the first and second bus means to a corresponding one of the pair of bus means.
